# EUROPÄISCHE PATENTANMELDUNG

(11) **EP 2 189 729 A2**
(43) Veröffentlichungstag der Anmeldung: **26.05.2010**
(21) Anmeldenummer: 09014520.2
(22) Anmeldetag: 20.11.2009
(51) Int. Cl.: F24D 12/02, F24D 19/10

(54) **Verfahren zum Betrieb einer Heizungsanlage**

(30) Priorität: 25.11.2008 DE 102008058928
(71) Anmelder: Viessmann Werke GmbH & Co. KG, 35107 Allendorf (DE)
(72) Erfinder: Dawoud, Belal, Dr., 59955 Winterberg (DE); Lauzi, Markus, 55131 Mainz (DE); Wohlfeil, Arnold, 35066 Frankenberg (DE); Schäfer, Axel, 35066 Frankenberg (DE)
(74) Vertreter: Wolf, Michael

(57) **Zusammenfassung**

Die Erfindung betrifft ein Verfahren zum Betrieb einer Heizungsanlage, umfassend einen ersten und einen zweiten Wärmeerzeuger (1, 2) mit unterschiedlichen Leistungsbereichen, wobei die Wärmeerzeuger (1, 2) jeweils einen Modulationsbereich zwischen einer minimalen und einer maximalen Leistung aufweisen, wobei der erste Wärmeerzeuger (1) eine kleinere maximale Leistung, aber einen höheren Wirkungsgrad als der zweite Wärmeerzeuger (2) aufweist. Nach der Erfindung ist vorgesehen, dass der erste Wärmeerzeuger (1) zur Deckung einer Grundlast und der zweite Wärmeerzeuger (2) zur Deckung einer Spitzenlast verwendet wird, und dass der erste Wärmeerzeuger (1) vor Zuschaltung des zweiten Wärmeerzeugers (2) auf eine Leistung unterhalb seiner maximalen Leistung eingestellt wird.

## Beschreibung

Die Erfindung betrifft ein Verfahren zum Betrieb einer Heizungsanlage gemäß dem Oberbegriff des Patentanspruchs 1.

Ein Verfahren der eingangs genannten Art ist nach der DE 26 59 806 A1 bekannt. Die dort offenbarte Heizungsanlage (Hybridheizgerät) besteht aus einem ersten und einem zweiten Wärmeerzeuger mit unterschiedlichen Leistungsbereichen, nämlich einer Wärmepumpe und einem Heizkessel. Dabei weisen die Wärmeerzeuger, wie üblich, jeweils einen Modulationsbereich zwischen einer minimalen und einer maximalen Leistung auf, wobei der erste Wärmeerzeuger (die Wärmepumpe) eine kleinere maximale Leistung, aber einen höheren Wirkungsgrad (Effizienz) als der zweite Wärmeerzeuger (der Heizkessel) aufweist.

Die Wärmeerzeuger gemäß der DE 26 59 806 A1 werden alternativ betrieben, d. h. entweder wird die Wärmepumpe oder der Heizkessel verwendet, wobei als Umschaltkriterium zum Beispiel die Aussentemperatur in Betracht gezogen wird.

Der Erfindung liegt die Aufgabe zugrunde, ein Verfahren zum Betrieb einer Heizungsanlage der eingangs genannten Art zu verbessern.

Diese Aufgabe ist mit einem Verfahren der eingangs genannten Art durch die im Kennzeichen des Patentanspruchs 1 aufgeführten Merkmale gelöst.

Nach der Erfindung ist also vorgesehen, dass der erste Wärmeerzeuger zur Deckung einer Grund(heiz)last und der zweite Wärmeerzeuger zur Deckung einer Spitzen(heiz)last verwendet wird und dass der erste Wärmeerzeuger vor Zuschaltung des zweiten Wärmeerzeugers auf eine Leistung unterhalb seiner maximalen Leistung eingestellt wird.

Mit anderen Worten ausgedrückt, findet erfindungsgemäß eine Abkehr vom so genannten Alternativbetrieb hin zu einem Parallelbetrieb statt, wobei durch die Leistungsreduktion beim ersten Wärmeerzeuger vor dem Zuschalten des zweiten Wärmeerzeugers ein nachteiliger Taktbetrieb vermieden werden kann. Unter Leistungsreduktion ist dabei zu verstehen, dass die Leistung des ersten Wärmeerzeugers auf eine Leistung unterhalb seiner maximalen Leistung eingestellt, dieser aber insbesondere nicht ausgeschaltet wird (im ausgeschalteten Zustand gibt der Wärmeerzeuger keine Leistung ab).

Insgesamt betrachtet, hat das erfindungsgemäße Verfahren zum Betrieb des Hybridheizgeräts den Vorteil, dass ein höherer energetischer Wirkungsgrad erreichbar und eine kontinuierliche Bereitstellung von Heizwärme ohne kostenintensiven Heizungspufferspeicher möglich ist. Die ineffiziente elektrische Zusatzheizung im Warmwasser- bzw. Heizungspufferspeicher bei elektrisch betriebenen und energetisch monovalenten Kompressionswärmepumpen kann bei deutlich höheren energetischen Wirkungsgraden auch mit einem günstigeren gas- oder ölbetriebenen Spitzenlastkessel realisiert werden.

Andere vorteilhafte Weiterbildungen des erfindungsgemäßen Verfahrens ergeben sich aus den abhängigen Patentansprüchen.

Der Vollständigkeit halber wird noch auf die EP 0 042 958 A2 hingewiesen, aus der eine Heizungsanlage mit einer Wärmepumpe bekannt ist, bei der der Heizkessel und die Wärmepumpe aber nie gleichzeitig betrieben werden (Alternativbetrieb).

Das erfindungsgemäße Verfahren zum Betrieb einer Heizungsanlage einschließlich seiner vorteilhaften Weiterbildungen gemäß der abhängigen Patentansprüche wird nachfolgend anhand der graphischen Darstellung zweier bevorzugter Regelungsbeispiele genauer erläutert.

Es zeigt
- Figur 1: ein Diagramm mit einem über der Zeit aufgetragenen Leistungsverlauf, wobei die maximale Leistung des ersten Wärmeerzeugers größer als die minimale Leistung des zweiten Wärmeerzeugers ist; und
- Figur 2: ein Diagramm ähnlich Figur 1, wobei die maximale Leistung des ersten Wärmeerzeugers 1 kleiner als die minimale Leistung des zweiten Wärmeerzeugers ist.

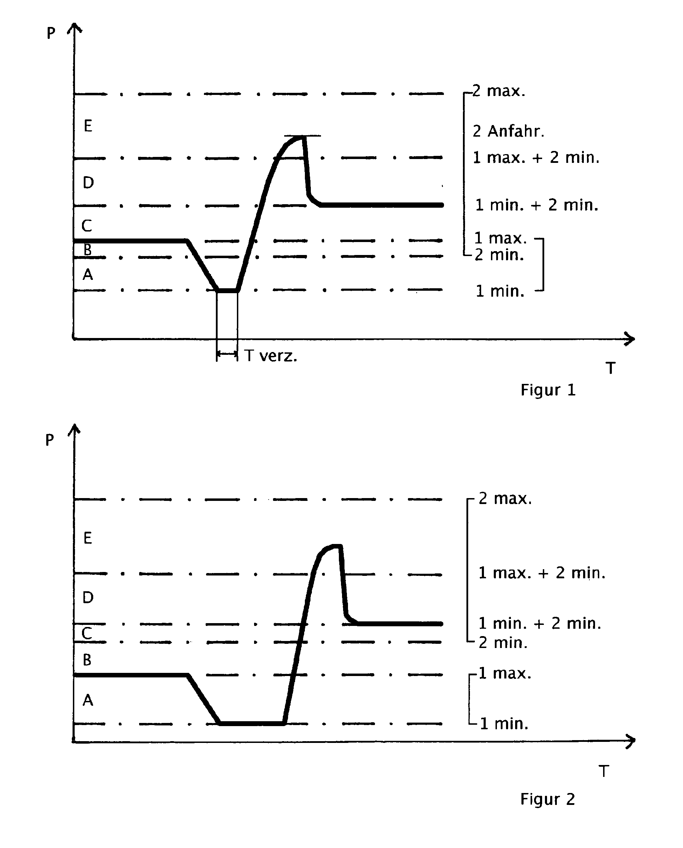

In den beiden dargestellten Diagrammen (Figur 1 und 2) ist jeweils die von zwei Wärmeerzeugern 1, 2 erbrachte Leistung über der Zeit aufgetragen. Damit wird ein Verfahren zum Betrieb einer Heizungsanlage verdeutlicht, bei dem ein erster und ein zweiter Wärmeerzeuger 1, 2 mit unterschiedlichen Leistungsbereichen vorgesehen sind, wobei die Wärmeerzeuger 1, 2 jeweils einen Modulationsbereich zwischen einer minimalen und einer maximalen Leistung aufweisen, wobei der erste Wärmeerzeuger 1 eine kleinere maximale Leistung, aber einen höheren Wirkungsgrad als der zweite Wärmeerzeuger 2 aufweist. Bezüglich des ersten Wärmeerzeugers 1 ist bevorzugt vorgesehen, dass dieser als Wärmepumpe, insbesondere als Kompressions- oder als Sorptionswärmepumpe, ausgebildet ist. Bezüglich des zweiten Wärmeerzeugers 2 ist bevorzugt vorgesehen, dass dieser als Heizkessel zur Verbrennung fossiler Brennstoffe, insbesondere als Gas- oder Ölbrennwertheizkessel, ausgebildet ist. In den Diagrammen bezeichnet die mit "1 min." gekennzeichnete, gestrichelte Linie die minimal vom ersten Wärmeerzeuger 1 erbringbare Leistung, "1 max." die maximal vom ersten Wärmeerzeuger 1 erbringbare Leistung, "1 min. + 2 min." die Summe aus minimal vom ersten Wärmeerzeuger 1 und minimal vom zweiten Wärmeerzeuger 2 erbringbare Leistung und so fort. Mit A bis E sind entsprechende Leistungsbereiche gekennzeichnet, also zum Beispiel in Figur 2 der Leistungsbereich A, der sich zwischen der maximal und minimal vom ersten Wärmeerzeuger 1 erbringbaren Leistung befindet.

In Figur 1 überlappen sich die Leistungsbereiche der Wärmeerzeuger 1, 2; hier ist also die minimale Leistung "2 min." des zweiten Wärmeerzeugers 2 kleiner als die maximale Leistung "1 max." des ersten Wärmeerzeugers 1. In den Leistungsbereichen A und B kann der erste Wärmeerzeuger 1 allein die geforderte Leistung ohne Weiteres abdecken bzw. erbringen.

Liegt aber die geforderte Leistung im Leistungsbereich C (also oberhalb der maximal vom ersten Wärmeerzeuger 1 erbringbaren Leistung), würde (ohne das erfindungsgemäße Regelungsverfahren) der zweite Wärmeerzeuger 2 zu takten beginnen, wenn er bei einer entsprechenden Leistungsanforderung oberhalb des Leistungsbereichs B unmittelbar zum ersten Wärmeerzeuger 1 hinzugeschaltet würde. Die Ursache hierfür liegt darin, dass die Anfahrleistung ("2 Anfahr." - siehe Figur 1) eines üblichen Gas- oder Ölbrennwertgeräts in der Regel recht nahe bei seiner maximalen Leistung "2 max." liegt. Ein sofortiges Zuschalten des zweiten Wärmeerzeugers 2 würde also dazu führen, dass der Heizkreis kurzzeitig so viel Wärme bekäme, dass die Regelung den zweiten Wärmeerzeuger 2 direkt wieder abschalten würde, was aber natürlich nicht erwünscht ist.

Alternativ bestünde die Möglichkeit, bei einer oberhalb von B liegenen Leistungsanforderung den ersten Wärmeerzeuger 1 komplett abzuschalten und erst dann den zweiten Wärmeerzeuger 2 zuzuschalten. Dies kann aber ebenfalls nicht erwünscht sein, da der erste Wärmeerzeuger 1 so selten wie möglich ein- und ausgeschaltet werden sollte.

Erfindungsgemäß ist nun vorgesehen, dass der erste Wärmeerzeuger 1 zur Deckung einer Grundlast und der zweite Wärmeerzeuger 2 zur Deckung einer Spitzenlast verwendet wird, und dass der erste Wärmeerzeuger 1 vor Zuschaltung des zweiten Wärmeerzeugers 2 auf eine Leistung unterhalb seiner maximalen Leistung eingestellt wird. Dies ist in Figur 1 mittels der dicken, durchgezogenen Linie verdeutlicht, gemäß der bei einer Leistungsanforderung oberhalb des Leistungsbereichs B die Leistung des ersten Wärmeerzeugers 1 zunächst reduziert wird, und zwar bevorzugt auf seine minimale Leistung "1 min.", was eine gewisse Zeit dauert. Darüber hinaus wird auch nach dem Erreichen der minimalen Leistung "1 min." noch eine weitere voreinstellbare Verzögerungszeit "T verz." gewartet, bei der bei konstantem Wärmebedarf ein definiertes Defizit der geforderten Heizleistung entsteht. Nach Ablauf der Verzögerungszeit "T verz." wird der zweite Wärmeerzeuger 2 hochgefahren. Nach dem Erreichen einer stabilen Flamme "2 Anfahr." wird die Leistung des zweiten Wärmeerzeugers 2 auf dessen minimale Leistung reduziert, so dass sich bei laufendem ersten Wärmeerzeuger 1 insgesamt eine Leistungsabgabe von "1 min. + 2 min" einstellt.

Erfindungsgemäß wird also verhindert, dass der erste Wärmeerzeuger 1 abgeschaltet werden muss. Außerdem wird erreicht, dass der zweite Wärmeerzeuger 2 deutlich seltener taktet. Die weiterhin vorgesehene zusätzliche Verzögerungszeit führt dazu, dass der zweite Wärmeerzeuger 2 eine Mindestlaufzeit erreicht, so dass beide Wärmeerzeuger 1, 2 effektiv ihren jeweiligen Heizbeitrag abdecken können. Diese Mindestlaufzeit kann so eingestellt werden, dass sich ein - zum Beispiel energetisches - Optimum zwischen größerer Bedarfsunterdeckung und weniger häufigerem Takten einerseits und geringerer Bedarfsunterdeckung und häufigerem Takten andererseits einstellt.

Möglich ist auch (nicht dargestellt, aber von Patentanspruch 1 umfasst), dass der erste Wärmeerzeuger 1 nicht auf seine minimale Leistung "1 min.", sondern (abhängig von der Überlappung der Modulationsbereiche der beiden Wärmeerzeuger 1, 2 sowie von der Abweichung der geforderten Leistung von der maximalen Leistung des ersten Wärmeerzeugers 1) auf eine Leistung oberhalb seines Minimums zurückgefahren wird.

Wird nun (ausgehend von der Leistung "1 min. + 2 min." seitens des Verbrauchers mehr Leistung gefordert (Forderung einer Leistungserhöhung), dann wird zunächst die Leistung des ersten Wärmeerzeugers 1 erhöht. Erst nach Erreichen der maximalen Leistung des ersten Wärmeerzeugers 1 (also "1 max. + 2 min.") wird auch die Leistung des zweiten Wärmeerzeugers 2 wieder hoch moduliert (also maximal bis "1 max. + 2 max." - in den Figuren nicht dargestellt).

Wird dagegen (diesmal von einer Leistung "1 max. + 2x", wobei "2 min. < 2x < 2 max.", ausgehend) weniger Leistung gefordert (Forderung einer Leistungserniedrigung), dann wird zunächst die Leistung des zweiten Wärmeerzeugers 2 auf dessen minimale Leistung "2 min." reduziert. Erst bei noch geringerem Leistungsbedarf des Verbrauchers wird auch die Leistung des ersten Wärmeerzeugers 1 von "1 max." auf "1x" (wobei "1 min. < 1x < 1 max.") herunter moduliert. Ist der Leistungsbedarf des Verbrauchers geringer als die maximale Leistung des ersten Wärmeerzeugers 1, wird der zweite Wärmeerzeuger 2 ausgeschaltet und der erste Wärmeerzeuger 1 erbringt die gesamte geforderte Leistung.

Das gleiche Szenario kann in den Leistungsbereichen D und E verfolgt werden, wobei die dortigen Verzögerungszeiten "T verz." mit steigendem Leistungsniveau kürzer werden.

In Figur 2 ist eine im Vergleich zu Figur 1 etwas kompliziertere Situation dargestellt, bei der es keine Überlappung zwischen den Leistungsbereichen der beiden Wärmeerzeuger 1, 2 gibt. Dies kann entstehen, wenn die maximale Leistung des ersten Wärmeerzeugers 1 relativ klein und gleichzeitig die minimale Leistung des zweiten Wärmeerzeugers 2 relativ groß ist. In diesem Fall kann der erste Wärmeerzeuger 1 nur im Leistungsbereich A die geforderte Leistung abdecken.

Ab dem Leistungsbereich B würde der zweite Wärmeerzeuger 2 ohne das erfindungsgemäße Verfahren zu takten beginnen, wenn er bei einer entsprechenden Leistungsanforderung sofort zum ersten Wärmeerzeuger 1 zugeschaltet würde. Um dies zu vermeiden, könnte der erste Wärmeerzeuger 1 wiederum ganz ausgeschaltet werden, was aber ebenfalls nicht erwünscht ist und ein Takten des zweiten Wärmetausschers 2 eventuell auch nicht verhindert.

Erfindungsgemäß kann nun auch bei der in Figur 2 dargestellten Konstellation das erfindungsgemäße Verfahren zum Einsatz kommen, wobei die erwähnte Verzögerungszeit "T verz." deutlich länger als bei der Lösung gemäß Figur 1 gewählt wird, weil der zweite Wärmeerzeuger 2 beim Einschalten eine große Leistung einbringen wird.

Eine optimale Kombination aus Wärmeerzeugern 1, 2 ergibt sich schließlich dann, wenn die Summe der minimalen Leistungen ("1 min. + 2 min.") der beiden Wärmeerzeuger 1, 2 kleiner ist als die maximale Leistung ("1 max.") des ersten Wärmeerzeugers 1. Auch mit dieser Kombination ist das erfindungsgemäße Regelungsverfahren anwendbar, wobei die Verzögerungszeit kürzer sein wird, und zwar abhängig davon, wie sich die Modulationsbereiche der beiden Wärmeerzeuger 1, 2 überlappen.

### Bezugszeichenliste

- 1: erster Wärmeerzeuger
- 2: zweiter Wärmeerzeuger
- A bis E:: Leistungsbereiche
- P: Leistung
- T: Zeit

## Patentansprüche

1. Verfahren zum Betrieb einer Heizungsanlage, umfassend einen ersten und einen zweiten Wärmeerzeuger (1, 2) mit unterschiedlichen Leistungsbereichen, wobei die Wärmeerzeuger (1, 2) jeweils einen Modulationsbereich zwischen einer minimalen und einer maximalen Leistung aufweisen, wobei der erste Wärmeerzeuger (1) eine kleinere maximale Leistung, aber einen höheren Wirkungsgrad als der zweite Wärmeerzeuger (2) aufweist,
**dadurch gekennzeichnet,**
**dass** der erste Wärmeerzeuger (1) zur Deckung einer Grundlast und der zweite Wärmeerzeuger (2) zur Deckung einer Spitzenlast verwendet wird, und
**dass** der erste Wärmeerzeuger (1) vor Zuschaltung des zweiten Wärmeerzeugers (2) auf eine Leistung unterhalb seiner maximalen Leistung eingestellt wird.

2. Verfahren nach Anspruch 1,
**dadurch gekennzeichnet,**
**dass** der erste Wärmeerzeuger (1) vor Zuschaltung des zweiten Wärmeerzeugers (2) auf seine minimale Leistung eingestellt wird.

3. Verfahren nach Anspruch 1 oder 2,
**dadurch gekennzeichnet,**
**dass** der zweite Wärmeerzeuger (2) erst nach Verstreichen einer Verzögerungszeit zugeschaltet wird.

4. Verfahren nach Anspruch 3,
**dadurch gekennzeichnet,**
**dass** die Verzögerungszeit beginnt, wenn der erste Wärmeerzeuger 1 eine Leistung unterhalb seiner maximalen Leistung erreicht hat.

5. Verfahren nach Anspruch 3 oder 4,
**dadurch gekennzeichnet,**
**dass** die Verzögerungszeit in ihrer Länge einstellbar ist.

6. Verfahren nach einem der Ansprüche 1 bis 5,
**dadurch gekennzeichnet,**
**dass** bei Forderung einer Leistungserhöhung zunächst die Leistung des ersten Wärmeerzeugers (1) erhöht wird.

7. Verfahren nach Anspruch 6,
**dadurch gekennzeichnet,**
**dass** bei Forderung einer weiteren Leistungserhöhung zunächst der erste Wärmeerzeuger (1) auf seine maximale Leistung eingestellt und erst anschließend die Leistung des zweiten Wärmeerzeugers (2) erhöht wird.

8. Verfahren nach einem der Ansprüche 1 bis 7,
**dadurch gekennzeichnet,**
**dass** bei Forderung einer Leistungserniedrigung zunächst die Leistung des zweiten Wärmeerzeugers (2) verringert wird.

9. Verfahren nach Anspruch 8,
**dadurch gekennzeichnet,**
**dass** bei Forderung einer weiteren Leistungserniedrigung zunächst der zweite Wärmeerzeuger (2) auf seine minimale Leistung eingestellt und erst anschließend die Leistung des ersten Wärmeerzeugers (1) verringert wird.

10. Verfahren nach einem der Ansprüche 1 bis 9,
**dadurch gekennzeichnet,**
**dass** der erste Wärmeerzeuger (1) als Wärmepumpe, insbesondere als Kompressions- oder als Sorptionswärmepumpe, ausgebildet ist.

11. Verfahren nach einem der Ansprüche 1 bis 106,
**dadurch gekennzeichnet,**
**dass** der zweite Wärmeerzeuger (2) als Heizkessel zur Verbrennung fossiler Brennstoffe, insbesondere als Gas- oder Ölbrennwertheizkessel, ausgebildet ist.
